Europäisches Patentamt

European Patent Office

Office européen des brevets

(11) Numéro de publication: **0 509 391 A1**

# (12) DEMANDE DE BREVET EUROPEEN

(21) Numéro de dépôt: **92106122.2**

(22) Date de dépôt: **09.04.92**

(51) Int. Cl.5: **H01H 83/20**, H02H 1/00

(30) Priorité: **15.04.91 FR 9104683**

(43) Date de publication de la demande:
**21.10.92 Bulletin 92/43**

(84) Etats contractants désignés:
**AT BE CH DE DK ES GB GR IT LI LU MC NL PT SE**

(71) Demandeur: **HEINEMANN ELECTRIC (EUROPE) S.A.**

**CH-1345 Le Lieu(CH)**

(72) Inventeur: **Geiser, Francis**
**Chemin Vounoz 10b**
**CH-1400 Yverdon(CH)**
Inventeur: **Lazzarotto, Sergio**
**Mouson 1**
**CH-2074 Marin(CH)**

(74) Mandataire: **Caron, Gérard et al**
**ICB Ingénieurs Conseils en Brevets SA**
**Passage Max. Meuron 6**
**CH-2001 Neuchâtel(CH)**

(54) **Système de protection de circuits électriques.**

(57) La présente invention concerne un système de protection de circuits électriques (60, 61, 62) qui permet une analyse de l'évolution en temps réél des courants électriques circulant dans ces circuits électriques, cette analyse ayant pour but de faire non seulement de la protection, mais aussi de la prévention.

Ce sytème de protection comprend au moins un disjoncteur (64, 66) comportant une première bobine (70, 71) associée à un circuit magnétique et traversée par le courant principal, ainsi qu'une deuxième bobine (74, 75) également associée au circuit magnétique. Cette deuxième bobine est parcourue par un courant induit représentatif du courant électrique principal. Ce courant induit est traité par un circuit électronique (80) fournissant un signal traité représentatif d'au moins une caractéristique du courant principal, laquelle est utilisée pour la prévention des circuits électriques.

Fig.5

La présente invention est relative à un système de protection de circuits électriques permettant une analyse de l'évolution en temps réel des courants électriques circulant dans des circuits électriques par des moyens de mesure de ces courants, cette analyse ayant pour but de faire de la prévention, cette prévention pouvant être active ou passive.

Il est connu dans l'état de la technique des systèmes de protection d'une charge ayant plusieurs fonctions, ces systèmes permettant généralement un arrêt automatique du courant lorsqu'un état anormal survient. Par exemple, par la demande de brevet FR 2 645 362, il est déjà connu d'intégrér plusieurs fonctions dans un même concept pour un système de protection permettant de faire de la prévention active et passive. Le dispositif décrit dans cette demande comprend dans une première unité des disjoncteurs agissant sur plusieurs phases d'un circuit principal, ces disjoncteurs réagissant à un courant de surcharge, le mécanisme d'interruption étant aussi couplé à un électro-aimant permettant des manoeuvres d'interruption et de fermeture du circuit principal. Dans une deuxième unité est prévu un transformateur de courant sur chacune des phases, ce transformateur servant uniquement à détecter un courant passant dans la phase concernée. En outre, ce système comprend un moyen de production de signaux reliés aux transformateurs de courant, des moyens de déclenchement automatique ou télécommandé, des moyens de communication avec un microordinateur central et des moyens d'affichage.

Si ce système a l'avantage de proposer un ensemble de fonctions intégré dans un seul dispositif, il est relativement lourd en composants. En particulier, la fonction de protection court-circuit et la fonction d'arrêt en cas d'anomalie d'un paramètre prédéterminé de ce courant demandent deux mécanismes de déclenchement différents agissant sur la même paire de contacts. Ensuite, la fonction de mesure demande plusieurs unités comprenant des transformateurs de courant qui sont constructivement séparés des disjoncteurs. Ceci entraîne non seulement une augmentation du coût de construction, mais une complication lors du montage et un encombrement relativement important.

L'invention a pour but de fournir un système de protection d'au moins un circuit électrique plus simple et moins coûteux que celui de l'art antérieur cité ci-dessus.

L'invention a donc pour objet un système de protection d'au moins un circuit électrique alimentant au moins une charge, ce système comprenant au moins un disjoncteur comportant un circuit magnétique, une première bobine associée audit circuit magnétique et raccordée audit circuit électrique de manière à être traversée par le courant électrique principal alimentant ladite charge, et des moyens commandés par ladite première bobine pour ouvrir ledit circuit électrique lorsque le courant principal dépasse une valeur prédéterminée, ce système étant caractérisé en ce qu'une deuxième bobine est associée audit circuit magnétique pour permettre à un courant induit représentatif dudit courant électrique principal, d'être engendré dans cette deuxième bobine, cette dernière formant avec ledit disjoncteur un élément de base, et en ce que le système comporte également des moyens de traitement raccordés à ladite deuxième bobine pour traiter ledit courant induit de manière à fournir un signal traité représentatif d'au moins une caractéristique dudit courant électrique principal.

Grâce à ces caractéristiques, le système de protection suivant l'invention permet de faire de la prévention, car il englobe dans une seule unité, composée d'au moins un élément de base possédant deux bobines, les moyens de protection contre une surcharge éventuelle ainsi que les moyens de détection du courant circulant dans le circuit auquel le disjoncteur est associé. De plus, selon une autre caractéristique de l'invention, il est possible d'utiliser la deuxième bobine, servant à la mesure, pour déclencher, par un dispositif de commande prévu à cet effet, le mécanisme d'interruption du courant selon le même principe de fonctionnement que la première bobine du disjoncteur.

Le cumul de trois fonctions possibles assurées par un disjoncteur magnétique auquel on a ajouté une seconde bobine, de préférence concentrique et intérieure à la première bobine traversée par le courant principal alimentant une charge, est particulièrement intéressant. Les trois fonctions sont :

- la protection en cas de surcharge ou de court-circuit,
- la mesure des caractéristiques du courant principal et,
- une interruption du courant principal en fonction de critères prédéterminés autres que ceux qui déclenchent la coupure en cas de surcharge ou de court-circuit.

L'invention sera mieux comprise à l'aide de la description qui va suivre et des dessins qui l'illustrent à titre d'exemple. Sur ces dessins :

- la figure 1 représente schématiquement l'élément de base du système de protection d'un des circuits électriques selon l'invention;
- la figure 2 représente le schéma électrique correspondant à l'élément de base de la figure 1;
- la figure 3 représente schématiquement un premier mode de réalisation du système de protection de circuits électriques selon l'invention;
- la figure 4 montre un arrangement spatial modulaire du dispositif se trouvant à l'intérieur du rectangle I de la figure 3;

- la figure 5 représente schématiquement un autre mode de réalisation du système de protection des circuits électriques selon l'invention.

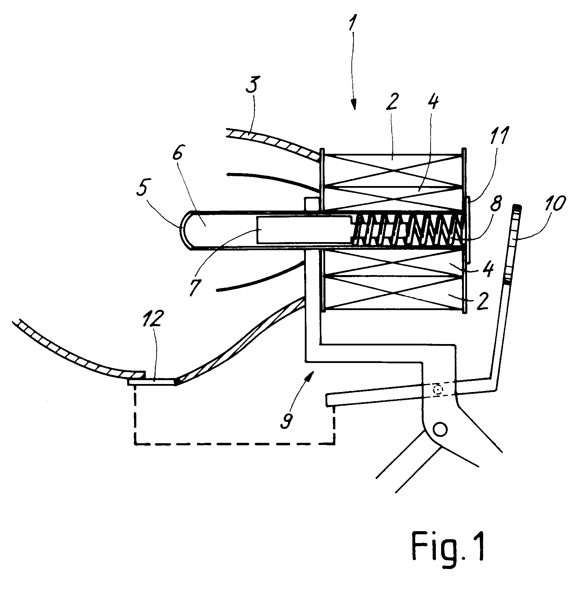

En se référant à la figure 1, on décrira ci-après uniquement à titre d'exemple un élément de base du système de protection proposé.

Cet élément de base comprend un disjoncteur hydromagnétique 1 comprenant une première bobine 2 dans laquelle circule le courant du circuit électrique 3 auquel le disjoncteur est associé, cette bobine étant enroulée sur une deuxième bobine 4 coaxiale, un courant induit pouvant circuler dans cette deuxième bobine par suite des variations du champ magnétique produit par la première bobine 2.

Cette deuxième bobine 4 est enroulée sur un tube non-magnétique étanche 5 rempli d'un liquide au silicone 6 dans lequel est monté coulissant un noyau mobile en fer 7 sollicité par un ressort de rappel 8 vers une position dans laquelle il est placé en dehors des bobines 2 et 4. Le déclenchement de ce disjoncteur hydromagnétique est provoqué par la variation du flux magnétique à l'intérieur du tube dans lequel se trouve le noyau mobile en fer.

Le disjoncteur comprend également un circuit magnétique 9 dont fait partie une armature mobile 10 et une pièce polaire 11, l'armature étant couplée à un contact 12 inséré dans le circuit électrique 3 de la bobine 2, par l'intermédiaire d'une liaison mécanique (non représentée).

Dans un autre mode de réalisation de cet élément de base, la deuxième bobine 4 est située à côté de la première bobine 2. Ces deux bobines 2, 4 étant associées au même circuit magnétique 9.

Lorsque l'intensité du flux magnétique augmente, attirant ainsi le noyau 7 à l'intérieur des bobines 2 et 4 en direction de l'armature 10, il en résulte une réduction de la réluctance et une augmentation supplémentaire de l'intensité du champ magnétique. Le liquide au silicone règularise la vitesse de déplacement du noyau 7, créant ainsi une temporisation prédéterminée dont la durée est inversement proportionnelle à l'intensité du flux magnétique.

Lorsque ce flux magnétique atteint une intensité prédéterminée, l'armature 10 est attirée vers la pièce polaire 11 et le contact 12 du disjoncteur s'ouvre. Dans le cas de forts courants, le champ magnétique engendré par l'une ou l'autre des deux bobines 2 et 4 est suffisant pour provoquer un déclenchement instantané, la position du noyau 7 n'ayant alors plus aucun effet.

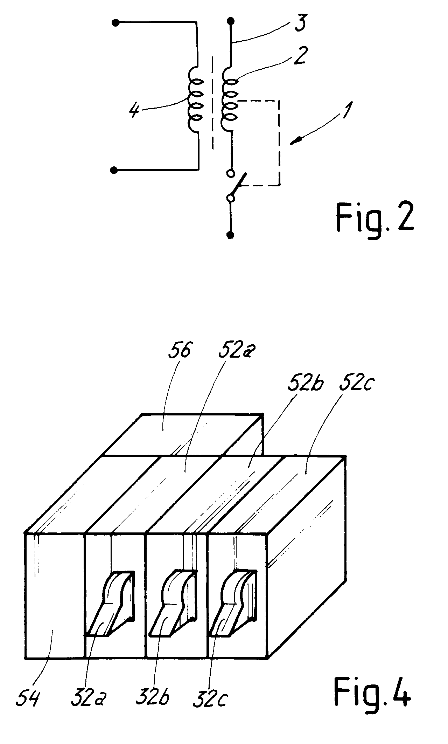

La figure 2 représente un schéma électrique équivalent de l'élément de base décrit dans la figure 1.

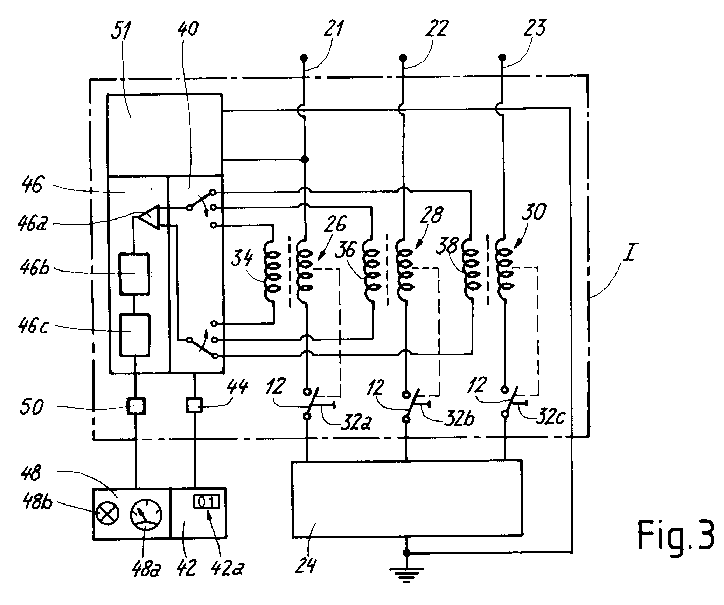

En se référant à la figure 3, on décrira un premier mode de réalisation du système de protection de circuits électriques selon l'invention.

Le système de protection conforme à ce mode de réalisation s'applique à trois circuits électriques 21, 22, 23 pouvant alimenter une ou plusieurs charges 24. Dans chacun de ces circuits électriques est inséré un élément de base 26, respectivement 28, 30 comme décrit ci-avant.

En outre, chacun de ces éléments de base possède un moyen mécanique 32a, respectivement 32b, 32c pour fermer ou ouvrir le contact 12 d'au moins un disjoncteur. Cependant, rien n'empêche de prévoir des moyens électriques pour commander le réarmement du disjoncteur ou encore comme moyens d'ouverture et de fermeture des circuits électriques.

Chacune des deuxièmes bobines 34, respectivement 36, 38 (c'est-à-dire les bobines 4 des éléments de base selon la figure 1) est reliée électriquement à un circuit électronique 40 de sélection d'un canal , permettant ainsi de sélectionner l'un des circuits électriques sur lequel l'utilisateur désire faire une mesure. Par conséquent, on entend ici par le mot "canal" l'un des circuits électriques dans lesquels sont insérées respectivement les bobines 34, 36 et 38.

Le circuit électronique 40 de sélection d'un canal est relié à un circuit 42 de sélection digitale du canal qui le commande. Fonctionnellement, le circuit peut comprendre un commutateur bipolaire à plusieurs positions (comme symbolisé sur la figure 3), ce commutateur pouvant naturellement être réalisé sous forme électronique à l'aide de transistors de commutation par exemple, dont la commande est assurée par le circuit de sélection 42. Celui-ci peut être équipé d'un indicateur 42a du canal branché pour la mesure. Le circuit 42 peut être à commande manuelle, ou à commande automatique selon un programme de sélection prédéterminé.

En plus, les circuits 40 et 42 sont isolés galvaniquement l'un de l'autre au moyen d'un optocoupleur 44.

Le circuit électronique 40 de sélection d'un canal est raccordé à un autre circuit 46 de traitement du courant induit dans la bobine 34, 36 ou 38. Ce circuit 46 de traitement du courant induit comprend un amplificateur 46a, un filtre 46b et un adaptateur d'impédance 46c.

Ce circuit de traitement 46 permet ainsi de fournir un signal traité donnant une image du courant circulant dans le canal auquel est associé la deuxième bobine 34, 36 ou 38 sélectionnée pour la mesure.

Le circuit 46 de traitement du courant induit est lui-même relié à une unité réceptrice 48 du signal traité, cette unité réceptrice étant capable d'interpréter ce signal et de donner ainsi la valeur d'un ou plusieurs paramètre(s) prédéterminé(s). On remarquera qu'il a aussi été prévu un optocoupleur 50 pour isoler galvaniquement le circuit 46 de l'unité réceptrice 48.

A titre d'exemple, le circuit 48 peut être équipé d'un ampéremètre 48a ou d'un traceur de courbes ou encore d'un indicateur visuel 48b permettant d'informer l'utilisateur sur l'évolution du courant induit dans les bobines 34, 36 ou 38 et ainsi du courant circulant dans les circuits 21, 22 et 23. L'indicateur visuel peut être déclenché par exemple au franchissement d'un seuil prédéterminé par le courant mesuré.

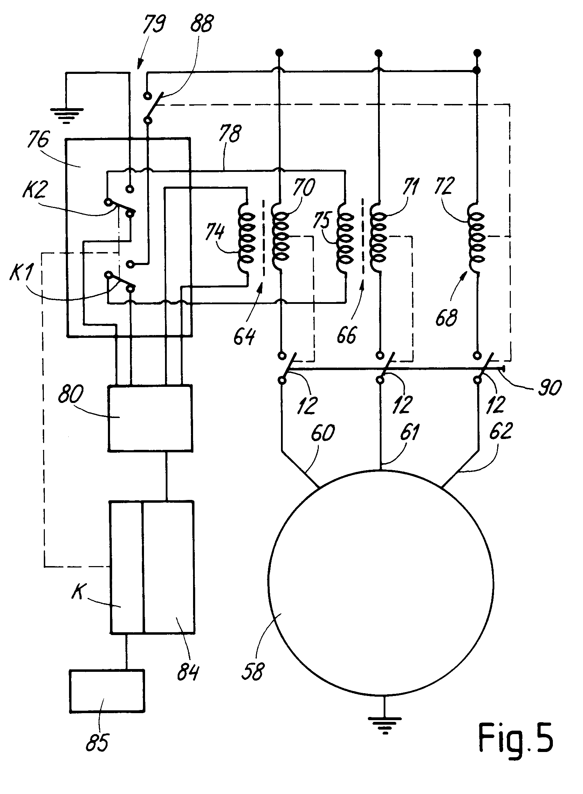

Le circuit 42 de sélection d'un canal ainsi que le circuit 46 de traitement du courant induit sont reliés à un circuit d'alimentation 51 comprenant un transformateur abaisseur de tension, de 220V à 15V par exemple, dont le primaire est relié à la terre ou à la phase neutre et à l'un 21 des circuits électriques en amont de la charge 24. L'ensemble des éléments se trouvant à l'intérieur du rectangle I forme un ensemble de modules compacts, comme schématisé sur la figure 4.

Ce premier mode de réalisation décrit donc un système de protection de circuits électriques avec une prévention passive. La première bobine 26, respectivement 28, 30 de chaque élément de base dans laquelle circule le courant du circuit 21, respectivement 22, 23 auquel cet élément de base est associé, assure une protection contre une surcharge éventuelle ou contre un court-circuit. La deuxième bobine 34, respectivement 36, 38 sert uniquement de moyen de détection du courant circulant dans le circuit électrique 21, respectivement 22, 23 associé, ce signal de détection permettant au circuit 46 de traitement du courant induit de fournir un signal traité qui puisse être interprété correctement par l'unité réceptrice 48 de ce signal traité, qui le traduira à son tour en une valeur réelle de la mesure. Dans le présent contexte, on entend par "prévention passive" le fait que l'opérateur, en surveillant l'unité réceptrice 48, peut réagir à tout moment pour interrompre l'alimentation des charges 24, s'il juge que les informations sur l'évolution des courants, fournies par cette unité, annoncent un fonctionnement anormal.

La figure 4 montre de manière très schématique un agencement spatial possible du dispositif se trouvant à l'intérieur du rectangle I de la figure 3.

Ce dispositif comprend donc essentiellement cinq modules, trois de ces modules 52a, 52b, 52c abritant au moins un élément de base constitué du disjoncteur magnétique 1 et de la deuxième bobine de mesure 4 qui lui est associée. Un quatrième module 54, de forme sensiblement semblable, abrite le circuit 40 de sélection d'un canal et le circuit 46 de traitement du courant induit. Le circuit d'alimentation 51 des circuits 40 et 46 est situé dans un cinquième module 56 se trouvant à l'arrière.

Il est à noter que l'ensemble représenté à la figure 4 intègre toutes les fonctions nécessaires à la mise en oeuvre de l'invention. Un utilisateur n'a besoin que de brancher les connexions des circuits principaux 21, 22 et 23, ainsi que celles reliées aux circuits 42 et 48.

En se référant à la figure 5, on décrira ci-après un deuxième mode de réalisation du système de protection de circuit électriques selon l'invention. Ce mode de réalisation est appliqué à un moteur triphasé 58 avec un système de protection permettant une prévention active des circuits alimentant ce moteur, chaque phase définissant un circuit électrique 60 respectivement 61, 62. Sur deux de ces circuits électriques 60 et 61 est prévu un élément de base 64 respectivement 66, alors que sur le troisième circuit 62 est prévu un disjoncteur conventionnel 68. Les deux éléments de base et le disjoncteur ont chacun une première bobine 70, respectivement 71, 72 servant de moyen de déclenchement du mécanisme d'interruption, le déclenchement se produisant lorsque le courant électrique circulant dans le circuit correspondant dépasse une certaine valeur.

Les deux éléments de base comportent en plus une deuxième bobine 74, respectivement 75 coaxiale et intérieure ayant une double fonction, à savoir une première fonction de détection du courant circulant dans la première bobine et une deuxième fonction de moyen de déclenchement du mécanisme d'interruption du disjoncteur, le déclenchement étant commandé par un dispositif prévu à cet effet et décrit ci-après.

Ces deux deuxièmes bobines 74 et 75 sont reliées à un dispositif de commutation 76 comprenant des inverseurs K1 et K2 et une bobine de commande K de ce dispositif de commutation, qui est agencé pour commuter le canal 78 associé à la bobine 75, soit sur une source de tension 79, soit sur un circuit 80 de traitement du courant induit (analogue au circuit 46 de la figure 3) afin d'obtenir un signal traité. Ce dernier est relié à un circuit de prévention active 84 destiné à analyser ces signaux de mesure et de prendre des décisions d'interruption par comparaison avec des paramètres prédéterminés qui y sont mémorisés sous forme électrique.

La bobine de commande K peut être excitée également à distance à l'aide d'un organe de commande 85 qui permet d'agir sur le dispositif de commutation 76 sans l'intervention automatique du circuit de prévention active 84.

Le dispositif de commutation 76 peut être réalisé sous la forme d'un relais électromécanique ou d'un circuit électronique de commutation.

Le circuit de prévention 84 est disponible dans le commerce sous la dénomination DMPR fabriqué par la société MTE Ltd, Stephenson Road, Leigh-on-Sea, SS q. 5. LS (Essex), Grande-Bretagne. Toutefois, avantageusement, les circuits 80 et 84 de la figure 5 sont réalisés sur un seul et même circuit par adaptation de la conception du circuit DMPR mentionné ci-dessus. Afin de diminuer au maximum l'encombrement des circuits électroniques utilisés, il est prévu d'assembler les divers composants èlectroniques au moyen de la technologie de montage en surface.

La source de tension 79 est avantageusement formée par l'une des phases alimentant le moteur 58 dans laquelle le disjoncteur 68 est dépourvu de deuxième bobine et par la masse ou le neutre, un contact d'interruption 88 étant prévu pour être couplé mécaniquement aux contact 12 du disjoncteur 68 de manière à interrompre l'alimentation du canal 78 associé à la bobine 75, lorsque le moteur 58 est coupé de son alimentation.

Le fonctionnement du système de la figure 5 est le suivant.

Lorsqu'une surcharge ou un court-circuit survient dans un des circuits principaux, l'élément de base 64, respectivement 66 ou le disjoncteur 68 remplit son office par le truchement de la bobine 70, 71 ou 72, provoquant ainsi l'ouverture des trois circuits alimentant la charge 58.

Cependant, la coupure peut également être obtenue en faisant circuler un courant dans la deuxième bobine 75 de l'élément de base 66 capable d'attirer l'armature de cet élément et d'ouvrir les contacts 12.

Pour ce faire, le circuit 84 de prévention active reçoit les courants induits dans les deuxièmes bobines 74 et 75 et compare les paramètres de ces courants aux paramètres prédéterminés et aux valeurs limites programmées dans ce circuit. Dès que les résultats des mesures dépassent les valeurs limites tolérées, le circuit 84 de prévention active excite la bobine de commande K du dispositif de commutation 76 afin de commuter la bobine 75 sur la source de tension 79. Ceci provoque alors le déclenchement des trois circuits étant donné que les mécanismes d'interruption des deux éléments de base 64, 66 et du disjoncteur 68 sont liés mécaniquement par un mécanisme approprié 90.

On voit donc que le système selon l'invention que l'on vient de décrire permet d'obtenir une coupure de la charge non seulement par suite d'une surcharge ou d'un court-circuit, mais également par suite du dépassement de certaines caractéristiques d'alimentation de cette charge dont on a préalablement fixé les valeurs limites dans le circuit de prévention 84.

On notera encore qu'il est tout à fait possible d'introduire dans le mode de réalisation de la figure 5 un circuit 40 de sélection d'un canal , relié à un circuit 42 de sélection digitale du canal , équivalent à celui décrit dans la figure 3. Dans ce cas-ci, les moyens 80 de traitement des courants induits ne reçoivent qu'un seul courant induit, à un instant donné, correspondant au courant induit du canal sélectionné pour la mesure. En cas d'arrêt préventif, la source de tension 79 fournit alors un courant de déclenchement à la deuxième bobine associée au canal sélectionné.

Finalement, il est aussi possible d'introduire dans le mode de réalisation de la figure 3, de manière équivalente à la figure 5, un dispositif de commutation 76, relié d'une part à une bobine de commande K et d'autre part à une source de tension 79, pour pouvoir ouvrir un ou plusieurs disjoncteur(s) à l'aide d'un organe de commande 85 permettant une commande d'interruption à distance d'un ou plusieurs courant(s) électrique(s).

**Revendications**

1. Système de protection d'au moins un circuit électrique (3; 21, 22, 23; 60, 61, 62) alimentant au moins une charge (24; 58), ce système comprenant au moins un disjoncteur (1) comportant un circuit magnétique (9), une première bobine (2; 70, 71) associée audit circuit magnétique et raccordée audit circuit électrique de manière à être traversée par un courant électrique principal alimentant ladite charge et des moyens (7, 8, 10, 12) commandés par ladite première bobine pour ouvrir ledit circuit électrique lorsque le courant électrique principal dépasse une valeur prédéterminée, ce système étant caractérisé en ce qu'une deuxième bobine (4; 34, 36, 38; 74, 75) est associée audit circuit magnétique pour permettre à un courant électrique induit représentatif dudit courant électrique principal d'être engendré dans cette deuxième bobine, cette dernière bobine formant avec ledit disjoncteur un élément de base (26, 28, 30; 64, 66), et en ce que ledit système de protection comporte également des moyens de traitement (46; 80) raccordés à ladite deuxième bobine pour traiter ledit courant induit de manière à fournir un signal traité représentatif d'au moins une caractéristique dudit courant électrique principal.

2. Système selon la revendication 1, caractérisé en ce que ladite deuxième bobine (4; 34, 36, 38; 74, 75) est située à l'intérieur de ladite première bobine (2; 70, 71) coaxialement à celle-ci.

3. Système suivant la revendication 1 ou 2, caractérisé en ce que ledit élément de base (26, 28, 30; 64, 66) est réalisé sous la forme d'un premier module (52a, 52b, 52c) et en ce que lesdits moyens de traitement (46) sont également réalisés sous la forme d'un deuxième module (54) compact assemblable audit premier module.

**4.** Système suivant l'une quelconque des revendications précédentes, caractérisé en ce que lesdits moyens de traitement (46) comprennent des moyens d'amplification (46a) raccordés à ladite deuxième bobine, des moyens de filtrage (46b) raccordés à la sortie desdits moyens d'amplification et des moyens d'adaptation d'impédance (46c) à la sortie desquels apparaît ledit signal traité.

**5.** Système suivant l'une quelconque des revendications précédentes, caractérisé en ce qu'il comprend en outre une source de tension (79) et des moyens de commutation (76), reliés d'une part à ladite source de tension et d'autre part auxdits moyens de traitement (80), pour brancher sélectivement ladite deuxième bobine (75) soit sur lesdits moyens de traitement pour leur fournir ledit courant induit, soit sur ladite source de tension pour engendrer dans cette deuxième bobine un courant capable d'ouvrir ledit circuit électrique principal correspondant au moyen dudit disjoncteur associé à cette deuxième bobine.

**6.** Système suivant la revendication 5, caractérisé en ce qu'il comprend un circuit de prévention active (84) destiné à analyser ledit signal traité provenant desdits moyens de traitement (80) dudit courant induit dans ladite deuxième bobine et à comparer ce signal traité à des valeurs prédéterminées de paramètres mémorisés dans ledit circuit de prévention active, le système comprenant également des moyens de commande (K), sensibles au résultat de cette comparaison, pour commander lesdits moyens de commutation (76) afin qu'ils branchent ladite deuxième bobine sur ladite source de tension lorsque ladite comparaison témoigne d'un état d'anomalie.

**7.** Système de protection de circuits électriques selon la revendication 6, caractérisé en ce que lesdits moyens de commande (K) desdits moyens de commutation (76) sont reliés à une unité de commande à distance (85) destinée à exciter lesdits moyens de commande (K) en fonction de paramètres autres que ceux mémorisés dans ledit circuit de prévention active (84).

**8.** Système suivant l'une quelconque des revendications précédentes comportant au moins deux circuits électriques (21, 22, 23) associés chacun à un élément de base (26, 28, 30), caractérisé en ce qu'il comporte des moyens de sélection (40), situés entre ladite deuxième bobine de chacun desdits éléments de base et lesdits moyens de traitement (46), pour relier sélectivement lesdits moyens de traitement à l'une ou l'autre desdites deuxièmes bobines à l'aide d'un circuit de sélection (42).

**9.** Système suivant l'une quelconque des revendications précédentes, caractérisé en ce qu'il est du type triphasé et en ce qu'il comprend sur l'un (62) des trois circuits électriques un disjoncteur (68) et sur chacun des deux autres circuits électriques (60, 61) un élément de base (64, respectivement 66) comportant une deuxième bobine (74, respectivement 75) pour assurer la mesure du courant électrique principal circulant dans le circuit électrique correspondant.

**10.** Système suivant la revendication 8 ou 9 et la revendication 5, caractérisé en ce que seulement une (75) desdites deuxièmes bobines est reliée auxdits moyens de commutation (76) pour, en cas d'anomalies autres qu'une surcharge ou un court-circuit, provoquer l'interruption du courant électrique principal circulant dans chacune des trois phases.

**11.** Système selon l'une quelconque des revendications précédentes, caractérisé en ce qu'il comprend une unité réceptrice (48) dudit signal représentatif du courant principal mesuré, cette unité réceptrice étant capable d'afficher les valeurs réelles d'au moins un paramètre de ce courant principal.

Fig. 1

Fig. 2

Fig. 4

Fig.3

EP 0 509 391 A1

Fig.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 599 195 (MERLIN GERIN)<br>* page 1, alinéa 2 - page 2, alinéa 3; figures 1,2,7 *<br>--- | 1 | H01H83/20<br>H02H1/00 |
| A | US-A-4 935 715 (POPECK)<br>* abrégé; figures 2,11 *<br>--- | 1 | |
| A | GB-A-2 226 464 (OHBAYASHI)<br>* abrégé * | 1 | |
| D | & FR-A-2 645 362<br><br>------ | | |

DOMAINES TECHNIQUES RECHERCHES (Int. Cl.5)

H01H
H02H
H01F

Le présent rapport a été établi pour toutes les revendications

| Lieu de la recherche | Date d'achèvement de la recherche | Examinateur |
|---|---|---|
| LA HAYE | 23 JUILLET 1992 | SALM R. |